# EUROPEAN PATENT SPECIFICATION

(11) **EP 2 127 461 B1**
(45) Date of publication and mention of the grant of the patent: **18.08.2010**
(21) Application number: 07824928.1
(22) Date of filing: 27.11.2007
(51) Int. Cl.: H04W 4/02, H04W 64/00

(54) **DETERMINATION OF LOCATION DEPENDENT INFORMATION**
BESTIMMUNG VON ORTSABHÄNGIGEN INFORMATIONEN
DÉTERMINATION D'INFORMATIONS DÉPENDANT DE L'EMPLACEMENT

(30) Priority: 21.12.2006 GB 0625502
(43) Date of publication of application: 02.12.2009
(73) Proprietor: Nokia Siemens Networks GmbH & Co. KG, 81541 München (DE)
(72) Inventor: CHAPMAN, Thomas Malcolm, Southampton, Hampshire SO18 4RY (GB); BARRACLOUGH, Kristan, Romsey, Hampshire SO51 8JR (GB)
(86) International application number: PCT/GB2007/050718
(87) International publication number: WO 2008/075091

(56) References cited:
- EP-A- 1 416 677
- WO-A-2004/014096
- WO-A-2004/102878
- VICTOR LANG ET AL: "A Locating Method for WLAN based Location Service" E-BUSINESS ENGINEERING, 2005. ICEBE 2005. IEEE INTERNATIONAL CONFERENCE ON BEIJING, CHINA 12-18 OCT. 2005, PISCATAWAY, NJ, USA,IEEE, 12 October 2005 (2005-10-12), pages 427-432, XP010860490 ISBN: 0-7695-2430-3

## Description

This invention relates to a method of determining location dependent information from one or more terminals in a cell, in particular for multimedia broadcast multicast service (MBMS).

For mobile operators, spectrum efficiency is a key driver in evolution of network capabilities. In MBMS, spectral efficiency may be increased in some circumstances if the positions (which is measurable as the pathloss to and/or angles of arrival) of terminals are known to the network through, for example, power control or beamforming Examples of such circumstances include situations where terminals or user equipments (UEs) are relatively sparsely located, or are concentrated into a certain area of a cell, such as to cover a car park or railway station, within a macrocell. However, there is currently no means for estimating terminal positions in the sense referred to above.

In Release 6 wideband code division multiple access (WCDMA), the only feedback for MBMS terminals that is defined in idle mode or CELL_FACH state is counting. Counting cannot be used to determine terminal position, in terms of pathloss, or angle of arrival (AoA), which is needed for improving spectral efficiency. Furthermore, in WCDMA, the probability factors that control the response to the counting procedure are sent on the MBMS control channel (MCCH), which is split into so called "critical" and "non-critical" information.

The existence of time multiplexed critical information reduces the rate at which the probability factors can be updated. Since prior to counting, the number and positions of terminals are unknown, there may be a need to understand UE placements and include counting in particular areas. In this situation it would be possible to limit the area for counting and then not use the probability factors (in the MCCH signal) to control the response rate as counting progresses. Therefore, the MCCH can be simplified to only include the critical information and this can be repeated at a required rate within a modification period.

Document WO-A-2004/014096 discloses a wireless local area network, comprising an access point which transmits first and second messages. A mobile unit may return a signal, allowing the access point to locate the mobile unit.

EP-A-1416677 discloses a method for discovery and mapping of network nodes in a peer-to-peer network by sending out messages at varying power levels and recording acknowledgments.

In accordance with the present invention, there is provided a method of determining position dependent information from one or more terminals in a cell according to the subject-matter of independent claim 1. Preferred embodiments are defined in the dependent claims.

An example of a method of determining position dependent information according to the present invention will now be described with reference to the accompanying drawings in which:
Figure 1 illustrates how critical and non-critical data is typically transmitted on the MCCH;
Figure 2a illustrates a first example of determining position dependent information according to the present invention;
Figure 2b illustrates a second example of determining position dependent information according to the present invention;
Figure 2c illustrates an example of determining position dependent information according to the present invention using scanned beamforming; and,
Figure 3 illustrates use of hierarchical modulation in the method of the present invention.

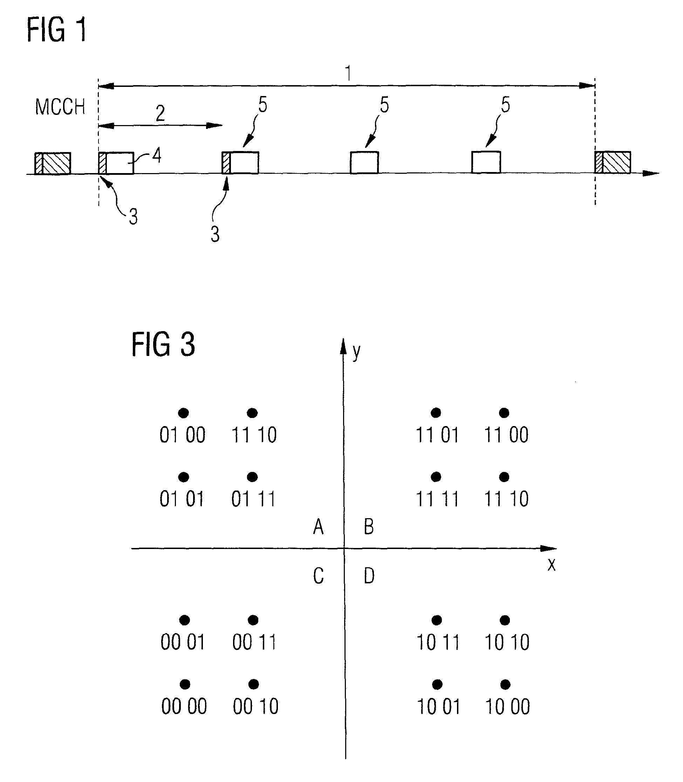

Fig. 1 shows how the MCCH transmits critical and non-critical data. Within a modification period 1, there is an initial access information period 2 during which a data block, split into MCCH non-critical data 3 and MCCH critical data 4, is transmitted. This block is repeated after the end of the access information period 2 and copied critical MCCH data 5 is sent in the remainder of the modification period 1.

In the present invention, a series of at least two signals indicating a function to be performed by UEs on the cell edge, or counting are transmitted to UEs from an enhanced Node B (eNB). These signals have different coverage areas, so that UEs receive a combination of the signals dependent on their position. The UEs respond according to the number of messages from the sequence they receive within an allotted time. When the eNB receives the responses from each UE, the eNB can derive the position of the UE.

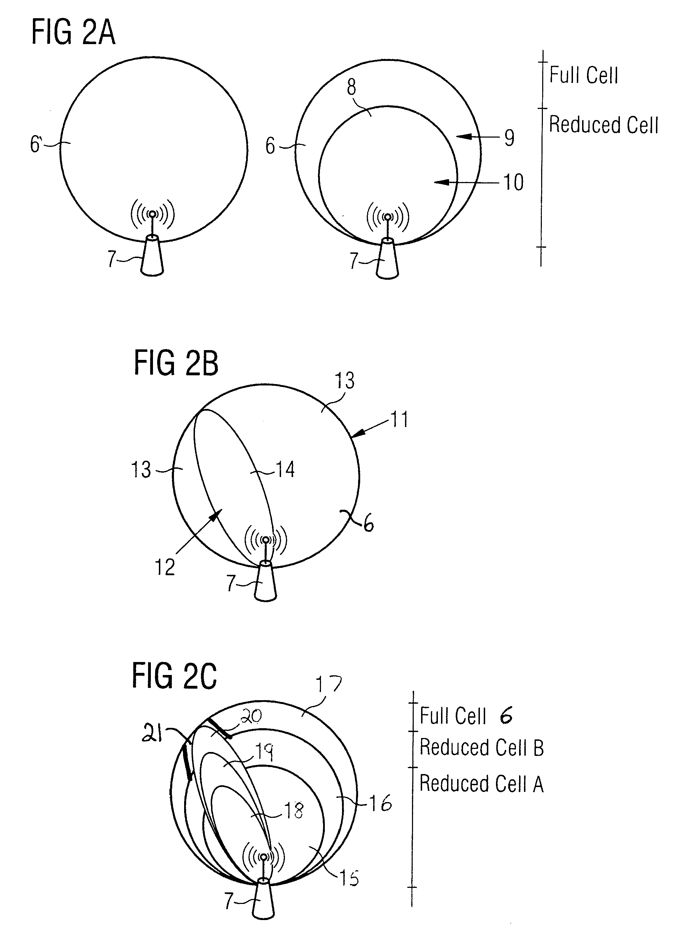

A first example is shown in Fig. 2a. Terminals in a cell 6 receive transmissions from a base station or Node B 7. To locate UEs within a more limited area of the cell, a reduced cell 8 is defined. In this example, two messages, e.g. counting signals, or function messages, are transmitted, the first message 9 of which covers the whole cell area 6 and the second message 10 of which is transmitted with a reduced power and hence covers only the area of the reduced cell 8, or vice versa. Alternatively, this could be done for two reduced cell areas of differing coverage, rather than the full cell and a reduced cell, as long as one is a subset of the coverage of the other. Terminals that receive the first message request 9, but not the second message request 10 respond. Such terminals are located near to the edge of the cell, in the area between the coverage of the first signal and that of the second. Alternatively, the first message may be sent to the reduced cell area and a subsequent message is sent over a larger area, so that the terminals are aware, in the smaller cell area, that they should not respond to the subsequent message. This can be expanded to three or more areas with respective messages by the use of successively increasing or decreasing power levels to form larger or smaller cell areas, or by "banded" areas, or cell portions arising from beamforming.

Fig. 2b illustrates the use of beamforming to produce a reduced cell area. A first message 11 is transmitted to the whole cell, but instead of simply reducing the power for a second message 12, as was done in the example of Fig. 2a, the transmitted beam is shaped to cover a designated area 14 to which the second message 12 is sent, leaving the remainder 13 of the cell area 6 outside the beam. In this area 13, UEs receive only one message 11. To further subdivide the full cell 6, the beam can be scanned across the cell and the messages adapted accordingly, so that responses from UEs to the base station are limited to a sufficiently small number that they do not cause interference with other traffic. If a sufficient series of power bands is used, then a low number of responses may be expected for some bands, particularly the outer ones. Thus, instead of using probability factors, the network can control the size of the counting bands to control the response rate.

The use of power reduction and beamforming can be combined to obtain other coverage patterns in which a response is transmitted. This is shown in Fig. 2c. The reduced power sub-areas 15, 16 of reduced cell A and reduced cell B and the edge of the full cell 17 will receive different messages. For example, in area 15 "do not respond", in area 16 "do respond, but only to one message" and in area 17 "do respond", so that the mid section 16 and the further section 17 can respond at separate times without further messages. Alternatively, there can be a response for areas 16, 17 without area 15. In addition, different shaped beams 18, 19, 20 with different powers produce further sub-divisions.

The sequence of counting messages for each of the cell area 6 and the reduced cell areas 10, 14 may be transmitted simultaneously using hierarchical modulation. Each message occupies a different level of the constellation. For example, with two messages, the first message with full coverage is transmitted using the first modulation level in the hierarchy and the second message at the next level.

Hierarchical modulation allows signalling of two messages with different coverage. In Fig. 3, UEs with poor SNR receive the first 2 bits of the 4 bit message, indicated by the quadrant in which the signal is located, whereas UEs with higher SNR are able to resolve the sub-modulation points and receive all 4 bits. In this way, signalling to achieve the proposed idea does not necessarily represent an additional overhead. The modulation pattern can be adapted to suit different areas by changing the spacing of the constellation and the amount of points within the carrier.

In the example of figure 3, UEs with poor SNR are able to detect the quadrant of the signalling constellation within which the transmitted signal is located, but are not able to resolve which of the 4 constellation points within the quadrant were transmitted. UEs with high SNR can also resolve the modulation point. If the modulation points are moved closer together, then the SNR required for unambiguously detecting the constellation point increases. Thus, for a UE with poor SNR, it may be able to determine that the signal is located within quadrant D, but not which of the four points within that quadrant. With good SNR, the UE may determine that the signal is at quadrant A, point 0100.

This invention enables the network to obtain information on the position of terminals within the cell area in a cost-efficient manner. This is particularly important where large cells are considered; as might be the case with single frequency network (SFN), or in a hierarchical network where lower level cells are allowed to re-use MBMS resources where there are no MBMS terminals, given a reduction in interference from the MBMS. Alternatively, where MBMS multicast point to multipoint (ptm) is used to provide coverage for a clustered group of UEs using, for example beamforming, then point to point (ptp) links can be used for any odd additional UEs which are not within the main clustering area and hence the directed beam. If beamforming is used in addition, then a smaller number of UEs respond and the UE pathloss or AoA can be predicted with even more accuracy.

This method can also send a check message to one of the size cells so that using it in the case of two cell areas, where one wants to communicate to UEs further away, then a third message can be sent to the UEs closer or further away so that this can be used as a check message to double check that UEs further away receive the two messages but not the one at the reduced size. Alternatively the check message can be used for terminals closer so that UEs which receive both of the closer messages definitely do not respond and it is UEs which receive only the one further message which do respond.

In the present invention, messages are sent from only one base station into an area of a cell. The downlink messages from the base station are sent at different powers and/or with different message content to locate a UE within a smaller area than that possible with a single transmission alone. The invention operates with as little use of resources as possible to determine the particular location of a UE with a reasonable degree of accuracy. The method also provides power level information regarding the UEs at the edge of the cell to determine whether these UEs need to be handed over to another base station, or if the power can be reduced without a reduction in service.

## Claims

1. A method of determining position dependent information from one or more terminals in a cell (6), the method comprising transmitting at least two messages from a base station (7) to terminals in the cell (6), wherein one message covers a first area (10) in the cell; and one or more further messages cover other areas (9) in the cell; and receiving responses from terminals dependent upon the messages received by each terminal; wherein the areas of coverage of the at least two messages at least partially overlap
**characterized in that**
the message is an MBMS counting indication message and the response is an MBMS counting response.

2. A method according to claim 1, wherein said one message has a coverage area (6) which is larger than the other areas and the one or more other coverage areas (8) fall within the larger one.

3. A method according to claim 1 or claim 2, wherein the messages to be sent to the larger coverage area (6) will be transmitted at a higher power than the other messages.

4. A method according to any preceding claim, wherein one of the messages requires all the terminals to respond and the other messages prevent transmission of a response from those terminals which receive the other messages.

5. A method according to any preceding claim, wherein the responses identify a location area within which the terminal resides since they indicate which sequence of messages the terminal received.

6. A method according to any preceding claim, wherein the area of coverage of the, or each other message is controlled by beamforming (18, 19, 20).

7. A method according to claim 6, wherein the beamforming beam is scanned across the cell to define subsequent other areas.

8. A method according to any preceding claim, wherein all of the messages are transmitted simultaneously.

9. A method according to any preceding claim, wherein the messages are hierarchically modulated.

10. A method according to any of claims 2 to 9, wherein the coverage areas comprise at least two of the full cell area, a reduced sub-area of the cell, a beamformed sub-area of the cell, or a section of the cell defined by a combination of the other areas and sub-areas.

## Patentansprüche

1. Verfahren zur Bestimmung von positionsabhängigen Informationen von einem oder mehreren Endgeräten in einer Zelle (6), wobei das Verfahren die folgenden Schritte umfasst: Senden von mindestens zwei Nachrichten von einer Basisstation (7) zu Endgeräten in der Zelle (6); wobei eine Nachricht einen ersten Bereich (10) in der Zelle abdeckt; und eine oder mehrere weitere Nachrichten andere Bereiche (9) in der Zelle abdecken; und Empfangen von Antworten von Endgeräten abhängig von den durch jedes Endgerät empfangenen Nachrichten; wobei sich die Abdeckungsbereiche der mindestens zwei Nachrichten mindestens teilweise überlappen, **dadurch gekennzeichnet, dass**
die Nachricht eine MBMS-Zählindikationsnachricht und die Antwort eine MBMS-Zählantwort ist.

2. Verfahren nach Anspruch 1, wobei die eine Nachricht einen Abdeckungsbereich (6) aufweist, der größer als die anderen Bereiche ist, und der eine oder die mehreren anderen Abdeckungsbereiche (8) in den größeren fallen.

3. Verfahren nach Anspruch 1 oder 2, wobei die zu dem größeren Abdeckungsbereich (6) zu sendenden Nachrichten mit einer höheren Leistung als die anderen Nachrichten gesendet werden.

4. Verfahren nach einem der vorhergehenden Ansprüche, wobei eine der Nachrichten erfordert, dass alle Endgeräte antworten, und die anderen Nachrichten die Übertragung einer Antwort von den Endgeräten, die die anderen Nachrichten empfangen, verhindern.

5. Verfahren nach einem der vorhergehenden Ansprüche, wobei die Antworten einen Standortbereich identifizieren, in dem sich das Endgerät befindet, da sie angeben, welche Sequenz von Nachrichten das Endgerät empfangen hat.

6. Verfahren nach einem der vorhergehenden Ansprüche, wobei der Abdeckungsbereich der oder jeder anderen Nachricht durch Strahlformung (18, 19, 20) gesteuert wird.

7. Verfahren nach Anspruch 6, wobei der Strahlformungs-Strahl über die Zelle streichen gelassen wird, um nachfolgende andere Bereiche zu definieren.

8. Verfahren nach einem der vorhergehenden Ansprüche, wobei alle Nachrichten gleichzeitig gesendet werden.

9. Verfahren nach einem der vorhergehenden Ansprüche, wobei die Nachrichten hierarchisch moduliert werden.

10. Verfahren nach einem der Ansprüche 2 bis 9, wobei die Abdeckungsbereiche mindestens zwei der folgenden Alternativen umfassen: den vollen Zellenbereich, einen reduzierten Teilbereich der Zelle, einen strahlgeformten Teilbereich der Zelle oder einen Abschnitt der Zelle, der durch eine Kombination der anderen Bereiche und Teilbereiche definiert wird.

## Revendications

1. Procédé de détermination d'informations dépendant de la localisation à partir d'un ou plusieurs terminaux dans une cellule (6), le procédé comprenant la transmission d'au moins deux messages à partir d'une station de base (7) aux terminaux dans la cellule (6), dans lequel un message couvre une première zone (10) dans la cellule ; et un ou plusieurs autres messages couvrent d'autres zones (9) dans la cellule ; et la réception de réponses des terminaux dépendant des messages reçus par chaque terminal ; dans lequel les zones de couverture des au moins deux messages se chevauchent au moins partiellement
**caractérisé en ce que**
le message est un message d'indication de comptage MBMS et la réponse est une réponse de comptage MBMS.

2. Procédé selon la revendication 1, dans lequel ledit un message a une zone de couverture (6) qui est plus grande que les autres zones et l'une ou plusieurs autres zones de couverture (8) tombent à l'intérieur de la plus grande.

3. Procédé selon la revendication 1 ou la revendication 2, dans lequel les messages devant être envoyés à la zone de couverture (6) plus grande seront transmis à une puissance plus élevée que les autres messages.

4. Procédé selon l'une quelconque des revendications précédentes, dans lequel un des messages requiert que tous les terminaux répondent et les autres messages interdisent la transmission d'une réponse à partir des terminaux qui reçoivent les autres messages.

5. Procédé selon l'une quelconque des revendications précédentes, dans lequel les réponses identifient une zone de localisation à l'intérieur de laquelle le terminal réside puisqu'elles indiquent quelle séquence de messages le terminal a reçu.

6. Procédé selon l'une quelconque des revendications précédentes, dans lequel la zone de couverture du, ou de chaque autre, message est contrôlée par conformation de faisceaux (18, 19, 20).

7. Procédé selon la revendication 6, dans lequel le faisceau de conformation de faisceaux est balayé à travers la cellule pour définir d'autres zones subséquentes.

8. Procédé selon l'une quelconque des revendications précédentes, dans lequel tous les messages sont transmis simultanément.

9. Procédé selon l'une quelconque des revendications précédentes, dans lequel les messages sont hiérarchiquement modulés.

10. Procédé selon l'une quelconque des revendications 2 à 9, dans lequel les zones de couverture comprennent au moins deux de la zone entière de la cellule, d'une sous-zone réduite de la cellule, d'une sous-zone conformée par faisceaux de la cellule, ou d'une section de la cellule définie par une combinaison des autres zones et sous-zones.
